# EUROPEAN PATENT APPLICATION

(11) **EP 1 249 507 A1**
(43) Date of publication of application: **16.10.2002**
(21) Application number: 00981784.2
(22) Date of filing: 15.12.2000
(51) Int. Cl.: C22C 1/00, C22C 14/00, C22C 27/06, C22C 30/00, C22F 1/11, C22F 1/18

(54) **METHOD FOR PREPARING HYDROGEN STORAGE ALLOY**

(30) Priority: 17.12.1999 JP 359899
(71) Applicant: Tohoku Techno Arch Co., Ltd., Sendai-shi, Miyagi 980-0845 (JP); Okada, Masuo, Sendai-shi, Miyagi 982-0807 (JP)
(72) Inventor: OKADA, Masuo, Sendai-shi Miyagi 982-0807 (JP); KURIIWA, Takahiro, Utsunomiya-shi Tochigi 321-0942 (JP); YAMASHITA, Shinichi, Narita-shi Chiba 286-0011 (JP); CHOU, Tsutomu, Chiba-shi, Chiba 262-0015 (JP)
(74) Representative: Weber, Dieter, Dr.
(86) International application number: JP0008937
(87) International publication number: WO01044527

(57) **Abstract**

A process for preparing a hydrogen storage alloy having as the main phase a body-centered cubic structure phase capable of absorbing, storing and releasing hydrogen, which comprises steps: a melting step of melting and homogenizing an alloy having a prescribed element ratio; a heat treatment step of retaining the homogenized alloy at a temperature (T) just under the melting point (Tm) of the alloy for a prescribed period of time; and a quenching step of rapidly cooling the heat-treated alloy.

## Description

### TECHNICAL FIELD

The present invention relates to a process for producing a hydrogen storage alloy capable of repeatedly carrying out the absorption and release of hydrogen. Particularly, the present invention relates to a process for preparing a BCC-based hydrogen storage alloy having theoretically a high capacity for hydrogen storage. Further, the present invention especially relates to a method for producing a hydrogen storage alloy having highly practicable properties, including, for example, not only quantitatively excellent hydrogen adsorption and desorption characteristics within practical pressure ranges and temperature ranges but also a capacity of adsorbing and desorbing hydrogen in quite great amounts per unit weight, together with a relatively inexpensive productivity, etc.

### RELATED ART OF THE INVENTION

At present, there have been fears of not only acid rain due to increasing NOₓ (nitrogen oxides) but also the global warming due to similarly increasing CO₂ in association with an increase in consumption of fossil fuel such as petroleum. Such environmental destruction has become a serious problem. Therefore, our attention has been greatly concentrated on development and practical application of various kinds of clean energy which is friendly to the earth. As a part of this new energy development, practical use of hydrogen energy is given. Hydrogen, which is a constituent element of water inexhaustibly present on the earth, is not only producible by using various kinds of primary energy, but also utilizable as a fluid energy in place of conventionally used petroleum without the risk of destroying the environment because its combustion product is only water. In addition, unlike electric power, it has excellent characteristics such as its relatively easy storage.

In recent years, therefore, investigation has been actively conducted involving hydrogen storage alloys as storage and transport media for hydrogen, and their practical application has been expected. Such hydrogen storage alloys are metals/alloys that can absorb or adsorb, and release hydrogen under an appropriate condition and, by the use of such alloys, it is possible to store hydrogen not only at a lower pressure but also in a higher density as compared to the case of the conventional hydrogen cylinders. In addition, the hydrogen volume density thereof is nearly equal to or rather more than that of liquid or solid hydrogen.

Among these hydrogen storage alloys, AB₅ alloys such as LaNi₅ and AB₂ alloys such as TiMn₂ have been put into practical use until now, but their hydrogen absorbing capacity is still insufficient. Therefore, as proposed, for example in Japanese Unexamined Patent Publication (Kokai) No. 10-110225 (JP, A, 10-110225 (1998)), metals having a body-centered cubic structure (hereinafter referred to as "BCC" or " BCC type") (e.g., V, Nb and Ta), and BCC type alloys thereof (e.g., TiCrV-based alloys, etc.) have been mainly examined in recent years because the number of hydrogen absorbing sites is great and the hydrogen absorbing capacity per unit weight of the alloy is an extremely large value as large as H/M = ca. 2 wherein H is an occluded hydrogen atom and M is a constituent element for the alloy (about 4.0 wt% in case of V with an atomic weight of around 50, etc.).

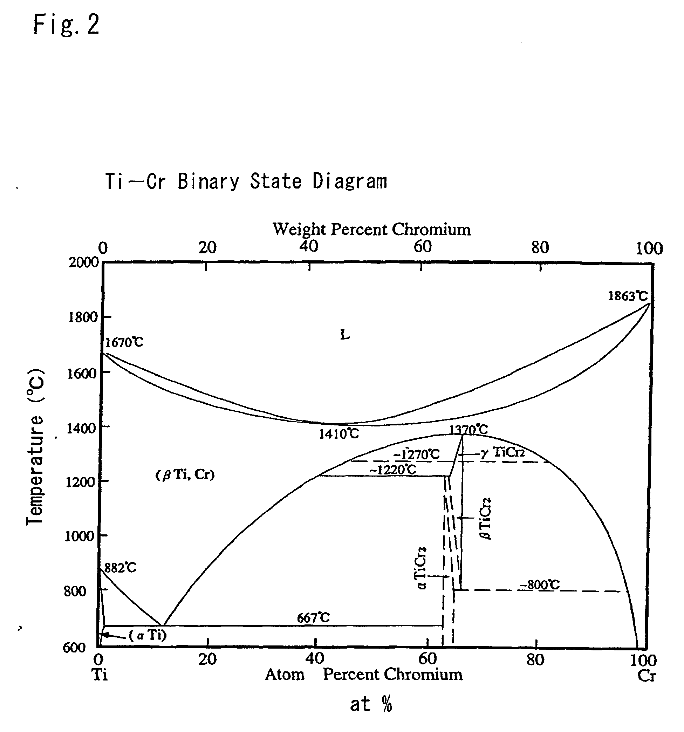

With regard to alloys wherein Ti and Cr are comprised, as suggested in JP, A, 10-110225, when the admixture ratio of the constituent metals in alloys comprised of only Ti and Cr is brought to such an extent that it will be conductible to absorb and release hydrogen at a practicable temperature and pressure (i.e., the atomic ratio of Ti is set at 5 < Ti (at%) < 60), a temperature range for forming a BCC structure becomes very narrow between a melting point of the alloy and a temperature at which a C14 crystal structure is formed as also apparent from FIG. 2 (phase diagram for the Ti-Cr binary alloy). Consequently, other C14 crystal structure phases which are different from BCC are formed at 90 wt% or more in the alloy and it is very difficult to produce the BCC. Therefore, the aforementioned TiCrV-based alloys are products obtained by admixing V as an element highly capable of forming BCC together with both Ti and Cr so as to attain the BCC structure in a more stable fashion and at a lower temperature. It has been reported that it is difficult to form the BCC as their main phase even by application of heat-treatment unless the amount of V is at least 10% or more and as a result no good hydrogen adsorption and desorption characteristics are obtainable.

Further, a Ti-Cr-based alloy (comprised of 5 or more elements) having the formula: Ti_{(100-x-y-z)}CrₓA_{y}B_{z}, wherein A is one member selected from V, Nb, Mo, Ta and W, and B is two or more members selected from Zr, Mn, Fe, Co, Ni and Cu, and its crystalline structure is BCC, is disclosed in Japanese Unexamined Patent Publication (Kokai) No. 7-252560 (JP, A, 7-252560 (1995)), wherein it is pointed out that the aforementioned admixture of 5 or more elements is essential for acquiring the aforementioned BCC.

However, there are still problems: since V to be admixed with the aforementioned alloy has an atomic weight approximately similar to that of Ti or Cr, it may be admixed at an elevated quantity without reducing its hydrogen storage capacity per unit weight of the alloy product so much, but because it is very expensive, especially highly pure one (99.99 % purity) employed for such an alloy is extremely expensive, the price of the alloy product results in a very high level, whereby alloy costs will increase for absorbing and storing an equal amount of hydrogen.

Therefore, for inexpensive alloys free of using precious V, Mo-Ti-Cr-based and W-Ti-Cr-based alloys are proposed wherein Mo or W is admixed as, like V, an element highly capable of forming BCC with both Ti and Cr. However, for these Mo and W, as suggested in Japanese Unexamined Patent Publication (Kokai) No. 10-121180 (JP, A, 10-121180 (1998)), it has been reported as follows: such alloys are not made into BCC forms even by application of heat-treatments when Mo and/or W is admixed at 0 at%, nor is BCC obtainable as the main phase when Mo and/or W is admixed at a low level, similarly to the above V. Accordingly, no good hydrogen absorption and desorption characteristics will appear There are also problems: when the amounts of Mo and W to be admixed increase, the hydrogen absorbing capacity per unit weight of such alloys will be reduced because of their large atomic weight, and in case where these hydrogen storage metal alloys are used as energy sources for automobiles, bicycles, etc. in the form of hydrogen gas storage tanks and nickel hydrogen batteries, including fuel batteries, their weights would unavoidably increase when an attempt is made at attaining a necessary electric power and hydrogen-supplying performance.

In view of the foregoing points, the present inventors have paid much attention to the aforementioned problems and, as a result, succeeded in the present invention. An object of the present invention is to provide a process for producing a hydrogen storage metal alloy which is capable of providing such a hydrogen storage metal alloy being (i) producible in the aforementioned form having BCC main phases even if the level of precious V, or Mo and W which each lead to a decrease in hydrogen absorbing capacity per unit weight, is made null or as minimal as possible, also (ii) excellent in view of its cost and hydrogen absorbing capacity per unit weight and (iii) highly practicable.

### SUMMARY OF THE INVENTION

In order to solve the aforementioned problems, the present invention provides a process for producing a hydrogen storage alloy for adsorption, storage and desorption of hydrogen. According to the present invention, the processes are characterized in that:
(1) hydrogen storage alloy products have as the main phase a body-centered cubic structure-type phase capable of absorbing, storing and releasing hydrogen, and
(2) said process comprises steps:
   (a) a melting step of melting a starting alloy brought to a predetermined element ratio to form a homogeneous heat,
   (b) a heat-treatment step of retaining the homogenized alloy at a temperature equal to or just lower than the melting point of the alloy, preferably at a temperature where the ratio of the heat-treating process temperature (T) to the alloy melting point (Tm), T/Tm, is from 0.8 to 1.0, for a predetermined period of time; and
   (c) a quenching step of rapidly cooling the heat-treated alloy.

Such characteristics enable the production of hydrogen storage metal alloys having as the main phase a BCC-type phase with regard to not only Ti-Cr binary alloys, which were considered to be hardly attained in the prior art, but also alloys having a composition wherein V, Mo, Al, W, rare earth elements and others are contained at low levels.

In the hydrogen storage metal alloy-producing process according to the present invention, it is preferred that the retaining time range at the aforementioned heat treatment step is from 1 minute to 1 hour.

When a time range for the heat treatment step is less than 1 min, it is impossible to form sufficiently a BCC-type structure phase, and when it exceeds 1 hr, not only heat-treating costs increase but also an adverse action of deteriorating hydrogen adsorption and desorption characteristics due to precipitation of heteromorphic phases appears. Accordingly, the inventive time range leads to the excellent formation of the BCC structure phase with suppressing an increase in the treating cost.

In the hydrogen storage metal alloy-producing process according to the present invention, it is preferred that the starting alloy to be molten to form a homogeneous heat has a composition represented by the general composition formula:

Ti_{(100-a-0.4b)}Cr_{(a-0.6b)}M_{b}

wherein
M is vanadium (V); and
20 ≦ a (at%) ≦ 80 and 0 ≦ b (at%) ≦ 10.

As a result thereof, alloys wherein the main phase is a BCC-type structure can be produced in a stable fashion from each highly practicable hydrogen storage alloy which is excellent in cost and hydrogen storage capacity per unit weight.
In the hydrogen storage metal alloy-producing process according to the present invention, it is preferred that the starting alloy to be molten to form a homogeneous heat has a composition represented by the general composition formula:

Ti_{(100-a-0.4b)}Cr_{(a-0.6b)}M_{b}

wherein
M is at least one element of molybdenum (Mo) and tungsten (W); and
20 ≦ a (at%) ≦ 80 and 0 ≦ b (at%)<5.

As a result thereof, alloys wherein the main phase is a BCC-type structure can be produced in a stable fashion from each highly practicable hydrogen storage alloy which is excellent in cost and hydrogen storage capacity per unit weight.
In the hydrogen storage metal alloy-producing process according to the present invention, it is preferred that the starting alloy to be molten to form a homogeneous heat has a composition represented by the general composition formula:

Ti_{(100-a-0.4b)}Cr_{(a-0.6b)}V_{(b-c)}M_{c}

wherein
20 ≦ a (at%) ≦ 80, 0 ≦ b (at%) ≦ 10, and
0 ≦ c (at%)<5; and
M is at least one element of Mo and W.

As a result thereof, alloys wherein the main phase is a BCC-type structure can be produced in a stable fashion from each highly practicable hydrogen storage alloy which is excellent in cost and hydrogen storage capacity per unit weight.
In the hydrogen storage metal alloy-producing process according to the present invention, the melting step for melting an starting alloy to form a homogeneous heat is important. The melting and coagulation may be repeated predetermined times for homogenization, and/or stirring may be performed with melting via high frequency induction heating.
As a result thereof, the homogeneity of alloys can be improved to provide the BCC type structure phase in a higher ratio.

### BRIEF DESCRIPTION OF THE DRAWINGS

FIG. 1 is a flow chart illustrating a process for producing the hydrogen storage alloy according to an embodiment of the present invention.
FIG. 2 depicts a Ti-Cr binary system phase diagram.
FIG. 3 is an X-ray diffraction pattern of as heat-treated (at 1400 °C for 1 hour) alloy

   VₓTi_{37.5}Cr_{62.5-x}.
FIG. 4 is a graph showing hydrogen absorption and desorption characteristics (at 40°C) for as heat-treated (at 1400°C for 1 hour) alloy VₓTi_{37.5}Cr_{62.5-x}.
FIG. 5 is a graph showing the relationship of amounts of admixed V versus hydrogen absorption and desorption characteristics for a Ti-Cr-V alloy.
FIG. 6 is an X-ray diffraction pattern of as heat-treated (1400 °C, 1 hr) alloy Ti₄₀Cr_{57.5}M_{2.5} (M=Mo, W).
FIG. 7 is a graph showing hydrogen absorption and desorption characteristics (at 40°C) for as heat-treated (at 1400°C for 1 hour) alloy Ti₄₀Cr_{57.5}Mo_{2.5}.
FIG. 8 is a graph showing hydrogen absorption and desorption characteristics (at 40°C) for as heat-treated (at 1400°C for 1 hour) alloy Ti₄₀Cr_{57.5}W_{2.5}.
FIG. 9 is a graph showing the relationship of amounts of admixed Mo versus hydrogen absorption and desorption characteristics for a Ti-Cr-Mo alloy.
FIG. 10 is a graph showing the relationship of amounts of admixed W versus hydrogen absorption and desorption characteristics for a Ti-Cr-W alloy.
FIG. 11 is an X-ray diffraction pattern each of as heat-treated (1400 °C, 1 hr) alloys Ti_{37.5}Cr₆₀V_{2.5} and Ti_{37.5}Cr₆₀Mo_{1.25}V_{1.25}.
FIG. 12 is a graph showing the heat treatment temperature-dependency of hydrogen storage capacity for a Ti-Cr alloy.
FIG. 13(a) is a graph showing the dependency of phase changing temperature on amounts of admixed V for alloy Ti-Cr-V, and FIG. 13(b) is a graph showing the heat treatment temperature-dependency of hydrogen storage capacity therein.
FIG. 14 is a chart showing variations in X-ray diffraction patterns of Ti₂₅Cr₄₀V₃₅ alloy dependent on heat treatment temperature.
FIG. 15 is a graph showing the heat treatment time-dependency of hydrogen storage capacity for Ti-Cr-based alloys:
   (1) Ti₄₁Cr_{56.5}Mo_{2.5}, (2) Ti₄₁Cr_{56.5}Mo_{1.25}Al_{1.25}, (3) Ti_{41.7}Cr_{56.3}Mo₂,(4) Ti₄₀Cr₅₆Mo₂Al₁, (5) Ti_{37.5}Cr₅₅V₅Mn_{2.5}, (6) Ti₄₀Cr₅₇Mo₂La₁, (7) Ti₄₀Cr₅₆Mo₃Nb₁, (8) Ti₄₀Cr₅₆Mo₃Fe₁, and (9) Ti₃₈Cr₅₄V₅Mo₂Ta₁.

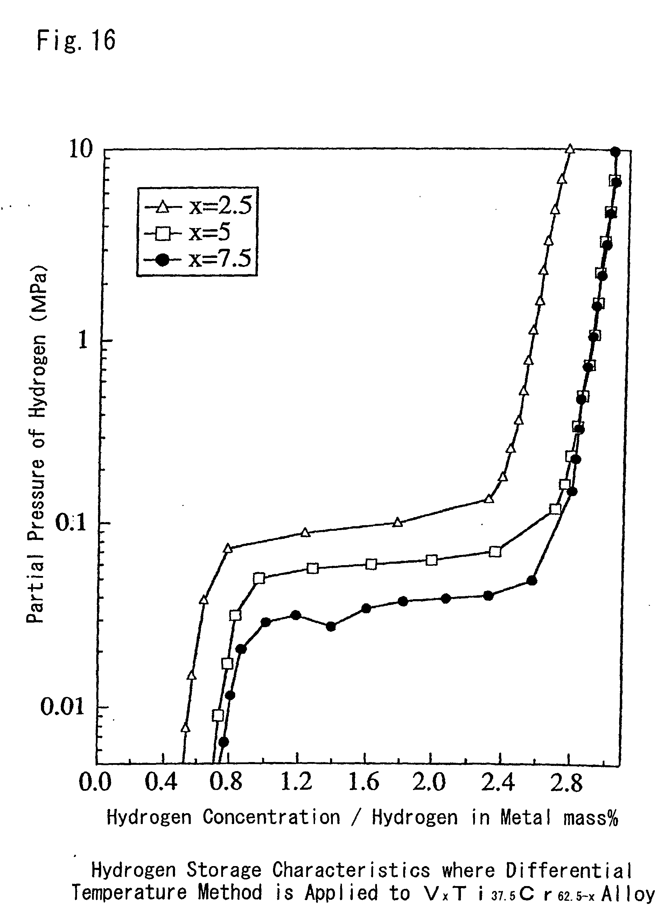

FIG. 16 is a graph of hydrogen absorption and desorption characteristics (release curve, 40°C , 5th cycle) upon application of differential temperature method to alloy VₓTi_{37.5}Cr_{62.5-x}.

### PREFERRED EMBODIMENTS FOR EXECUTING THE INVENTION

Described below are the hydrogen storage metal alloys of the present invention and production processes thereof in detail, relying on experiments conducted by the present inventors.

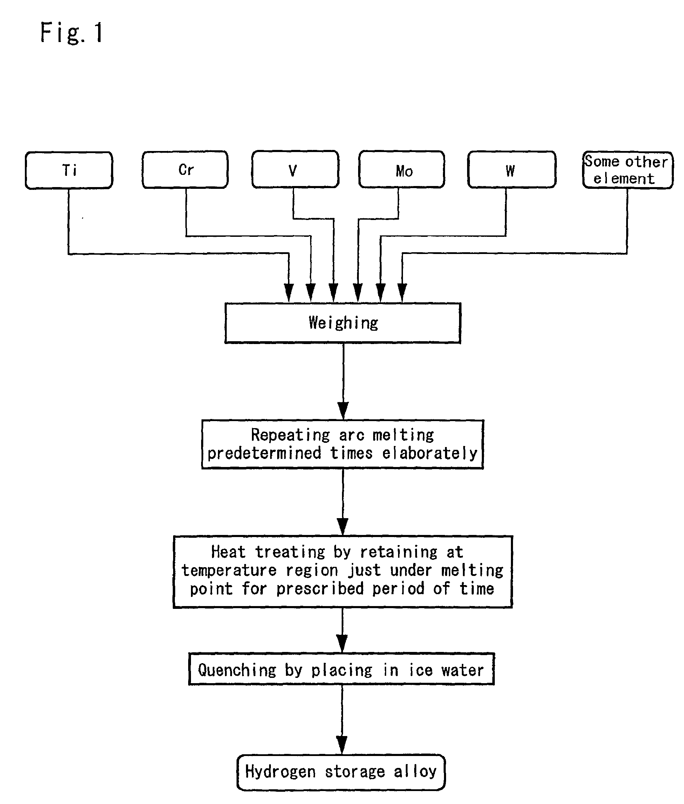

First, FIG. 1 is a flow chart showing a preferred embodiment of the process for producing the hydrogen storage alloys according to the present invention. Such a process is applied to the production of hydrogen storage alloys used in the experiments conducted by the present inventors as described herein below.

In this process for the production of hydrogen storage metal alloys, each constituent metal for an intended hydrogen storage alloy (for example, each of Ti, Cr and V where Ti_{37.5}Cr₆₀V_{2.5} is prepared as a product) is weighed at an amount corresponding to each composition ratio so as to bring the total weight of a resultant ingot to 12.5 g.

Each individual metal thus weighed is placed in an arc melting plant (not depicted), subjected to repeated treatments (melting-stirring ← → solidification) predetermined times (which may vary depending on the number of constituent elements in experiments but be usually approximately 4 to 5 times) in an argon atmosphere of about 40 kPa with scrupulous care to elevate a uniformity and the resultant homogenized ingot is then maintained at a temperature region just lower than the melting point of its melt for a predetermined time to accomplish the heat treatment.

Since a temperature region at which BCC forms are produced is present at an area just below the melting temperature owned by an alloy having a target composition as shown in the above FIG. 2 (phase diagram), the heat-treatment may be preferably effected at such a temperature region at which the BCC is produced and just below the melting temperature. For example, in the aforementioned composition containing about 60 at% of element Cr, the heat-treatment is preferably effected by retaining the molten alloy at about 1400°C. It is also preferable to select a suitable heat-treating temperature from temperature areas at which a target alloy is produced in the form of BCC and just below the melting temperature of the target alloy, depending on its alloy composition. Among heat-treating temperature areas at which the BCC is produced, it should be noted that a low treatment temperature is unpreferable because the hydrogen storage capacity will be deteriorated due to the generation of heteromorphic phases and it will take a longer time to accomplish the heat-treatment. Therefore, by taking the foregoing points into account, it is preferable to select a heat-treating temperature just lower than the melting temperature of the alloy, preferably a temperature where the ratio of the heat-treating process temperature (T) to the alloy melting point (Tm), T/Tm, is from 0.8 to 1.0.

When a heat-treating time is too short, it will be impossible to accomplish the formation of sufficient BCC structure phases, and when it is too long, the hydrogen storage capacity will be deteriorated due to the precipitation of heteromorphic phases according to the long-time heating. Accordingly, the operation period can be suitably selected on the basis of a selected heat-treating temperature, but it may be preferably within a range of from 1 min to 1 hour.

In the embodiments, after melting ingots, alloys per se are subjected to the aforementioned heat treatment without making any shapes. Since such a process does not require that cooled alloys are re-heated but allows producing efficiently alloy products having a BCC structure phase, it is preferable but the present invention is not limited to. For example, it may be preferred that molten alloys are shaped once by methods such as strip casting, single rolling and atomizing to afford plates, ribbons or powders, then cooled and the resultant alloys each having either the BCC phase + the Laves phase or the Laves phase alone are subjected to the aforementioned heat treatment so as to give products each having the BCC structure phase as the main phase.

Among these alloys, alloys (ingots) heat-treated to an extent that the BCC structure phase takes place as the main phase are rapidly cooled by dipping into ice water to give alloy products wherein the above BCC structure phase is still retained. In the embodiments, the aforementioned rapid cooling (quenching) is carried out by dipping into ice water, but the present invention is not limited to. Any can be optionally selected for these cooling methods. However, since the volume ratio of BCC structure phase varies depending on cooling rates and a slow cooling rate leads to a decrease in the BCC structure phase volume ratio, it is desired that the alloy is quenched preferably at a cooling rate of 100 K/sec or more.

Although the alloys of the present invention have a composition apt to induce a spinodal decomposition readily, it is defined that, because spinodal decomposing tissues cause deterioration of alloy's hydrogen absorption and desorption characteristics, they are permitted to the extent there is an unavoidable formation.

It has been examined and ascertained herein below whether or not the BCC structural phase is produced as the main phase by the aforementioned production processes for each composition and experimental results are also shown which support grounds for selecting the above compositions.

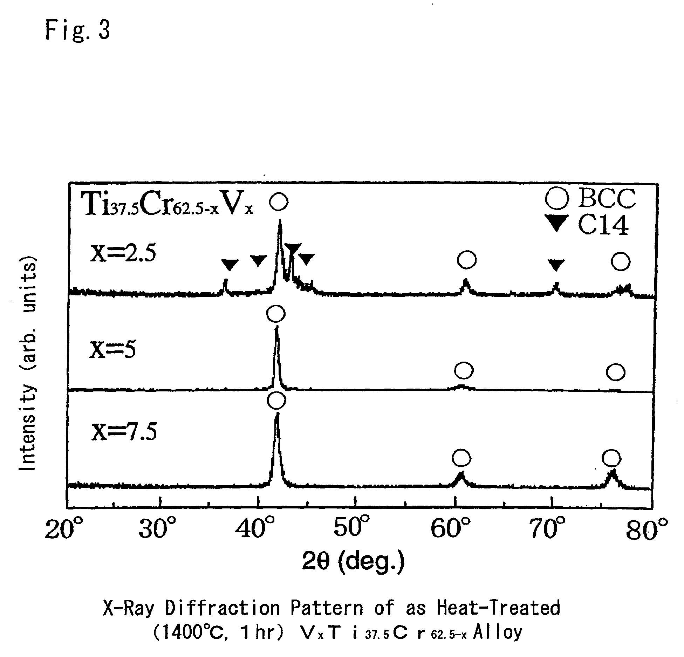

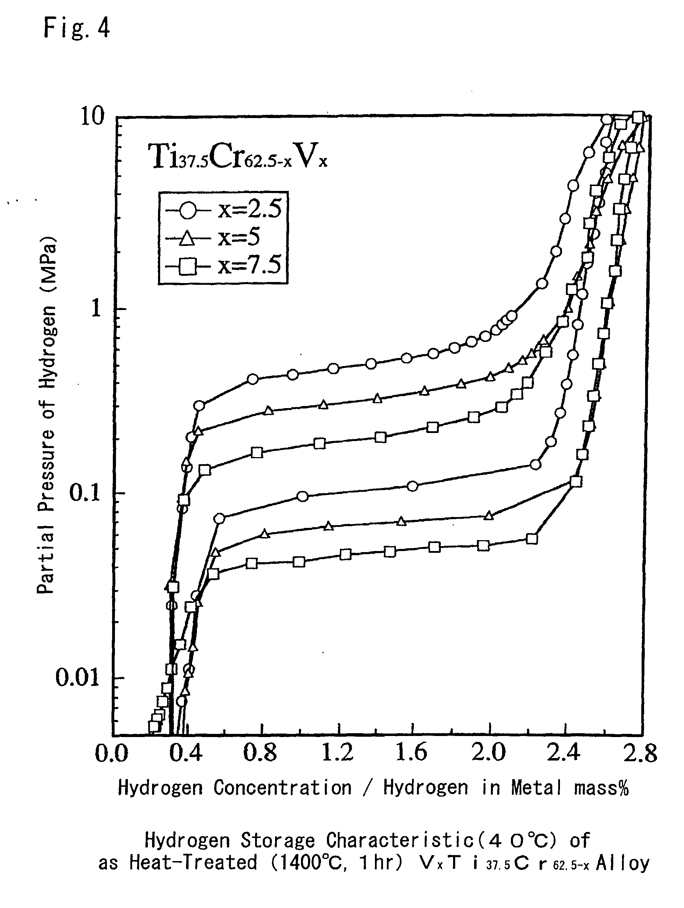

An X-ray diffraction pattern of an alloy product obtained by heat-treating VₓTi_{37.5}Cr_{62.5-x} alloy at 1400°C for 1 hr is shown in FIG. 3. As apparent from FIG. 3, even when V which was considered to be hardly utilizable in the prior art as aforementioned is admixed at 2.5 at%, the BCC takes place as the main phase and when V is set to 5 at% and 7.5 at%, respectively, the alloys are produced in the form of a BCC mono phase. The fact that each alloy as shown in FIG. 3 has the BCC structure reflects on its hydrogen absorption and desorption characteristics as shown in FIG. 4. Thus, it has been found that the BCC mono phase alloys wherein V is contained at 5 at% and 7.5 at% can absorb and release hydrogen at about 2.8 wt% which is approximately equal to or more than the amount achieved by the prior art alloy containing V at 10 at% or more. Further, it has been found that even the alloy wherein V is contained at 2.5 at% can absorb and release hydrogen at about 2.6 wt % which is approximately equal to the amount achieved by the prior art alloy containing V at 10 at% or more.

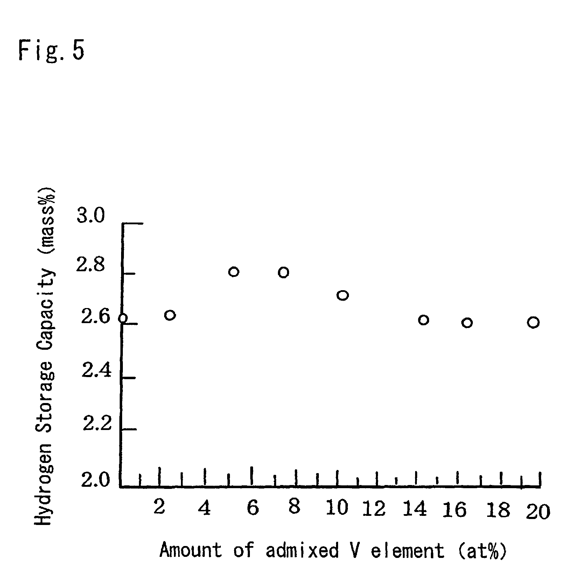

This is that the addition of V to the Ti-Cr binary alloy derives an increase in BCC structural phase volume ratio, whereby an amount of occluded hydrogen increases over that attained by the Ti-Cr binary alloy. Thus, it has been found that V is an element greatly apt to produce a BCC form and effective for bringing advantageous hydrogen absorption and desorption characteristics owned by the BCC phase into the Ti-Cr binary alloys. The hydrogen absorption and desorption characteristics affected by amounts of admixed V in connection with these Ti-Cr-V alloys were examined. The results are shown in FIG. 5.

The results as shown in FIG. 5 are unexpected ones. When an amount of the admixed element V is brought to 10 at% or more, which was considered to be preferable in the prior art, it is ascertained that target alloys to be produced are improved for their capability of forming the BCC phase and consequently alloy products having the BCC phase become manufacturable in a stable fashion according to an increase in amount of element V to be admixed; nevertheless, it results in their hydrogen storage capacity per unit weight equal to or less than that of V-free Ti-Cr binary alloys (without other materials). It is therefore apparent that their hydrogen storage capacity per unit weight reaches a maximum at a V admixture amount of 10 at% or less, especially 6 ± 2 at%, contrary to conventional understanding in the prior art. Accordingly, it is found that an amount of admixed V can be set to such a region so as to not only prevent an increase in cost for alloys due to production by unnecessarily admixing an excessive amount of expensive V but also increase a hydrogen storage capacity per unit weight.

Next, with respect to Ti-Cr-Mo(W)-based hydrogen storage alloys which have been associated with the aforementioned problems (for example, because of heavy elements with a large atomic weight in spite of their high BCC-forming capability against Ti-Cr alloys, when Mo and W are admixed in large quantities, the alloy products hardly exert sufficient properties, etc.), each content level of Mo and W therein has been examined according to the aforementioned production process. The results are described herein below.

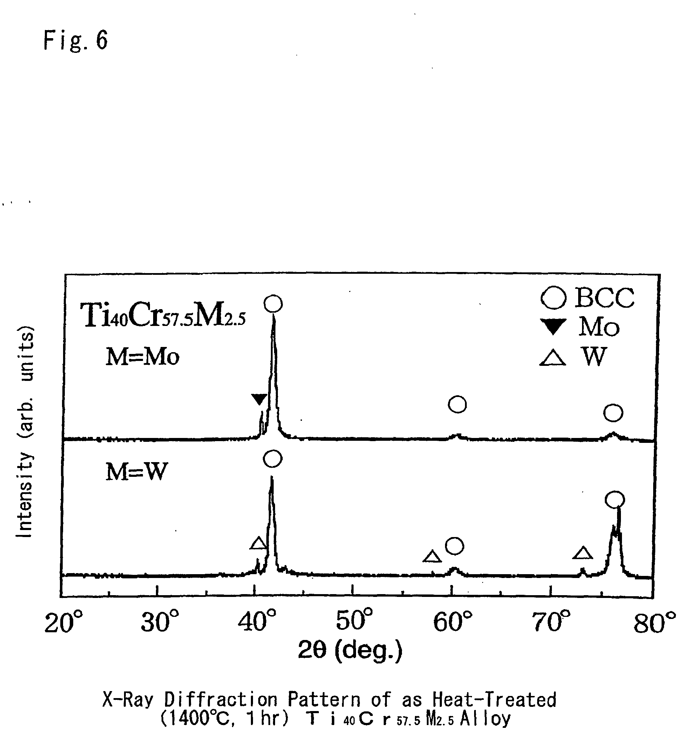

An X-ray diffraction pattern each of as heat-treated alloys Ti₄₀Cr_{57.5}Mo_{2.5} and Ti₄₀Cr_{57.5}W_{2.5} is shown in FIG. 6. It is found from the X-ray diffraction pattern as shown in FIG. 6 that, although Mo is admixed at a small amount, i.e., at 2.5 at% only, the resultant alloy products are substantially in the form of a BCC mono phase. For W, the BCC phases is also produced as the main phase though the Laves phase is slightly present.

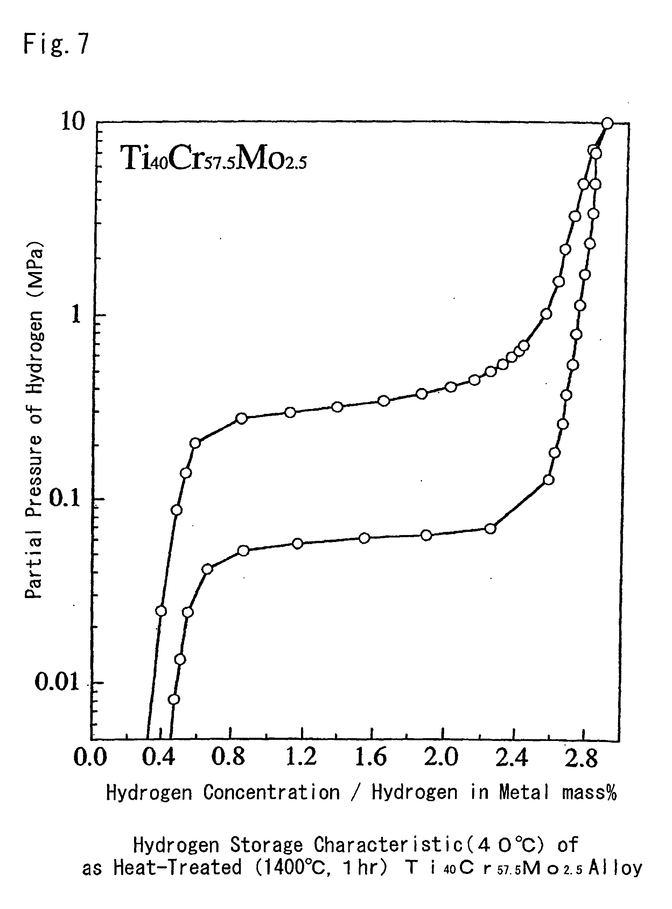

The hydrogen adsorption and desorption characteristics of as heat-treated alloy Ti₄₀Cr_{57.5}Mo_{2.5} are shown in FIG. 7. It has been noted therefrom that an amount of hydrogen occluded thereby is derived to an extent of about 2.9 wt%, which is close to a value of 3 wt% corresponding to the marginal performance considered to be intrinsically owned by the Ti-Cr binary BCC phase.

From these results, it has been found that Mo can be admixed even at a smaller amount than V so as to produce almost the BCC mono phase. Thus, it is noted that, as compared to the foregoing Ti-Cr-V alloys, an amount of additives can be reduced whereby a good property has been achieved.

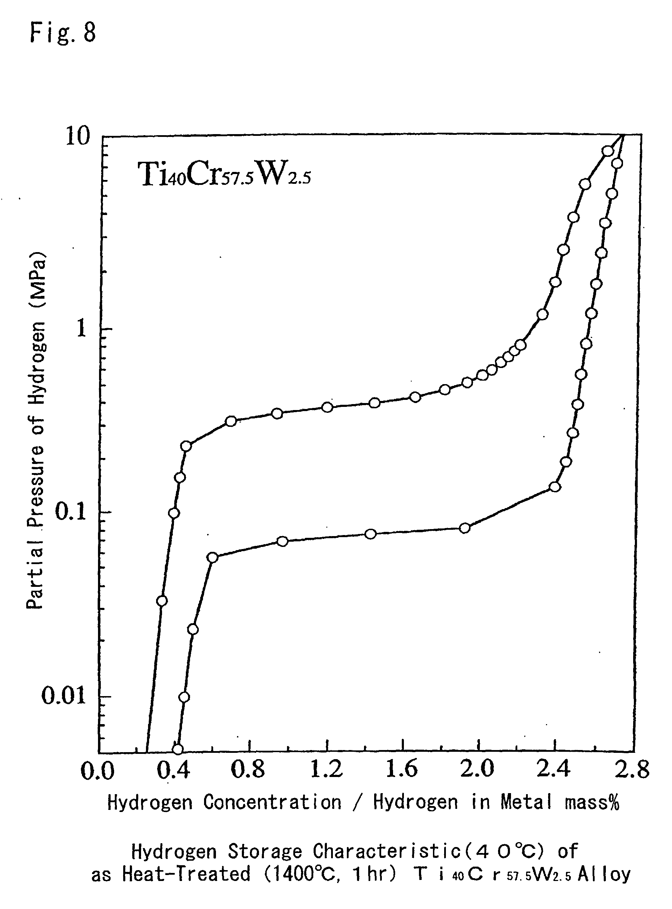

The hydrogen adsorption and desorption characteristics of as heat-treated alloy Ti₄₀Cr_{57.5}W_{2.5} are shown in FIG. 8. Similarly to the aforementioned Mo, the W-substituted alloys come to be substantially in the form of a BCC mono phase and their hydrogen adsorption capacity reaches about 2.7 wt % or more. Since W has a larger atomic weight, the maximal hydrogen adsorption capacity will be slightly reduced, in comparison with Mo and V cases, when W is admixed at an equal amount thereto.

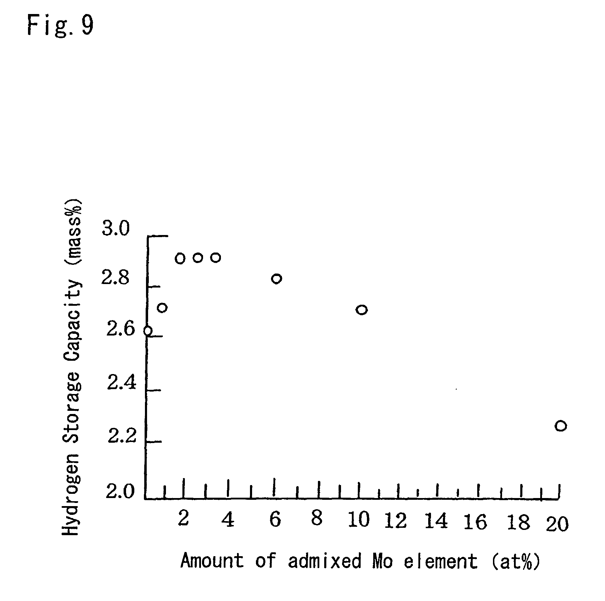

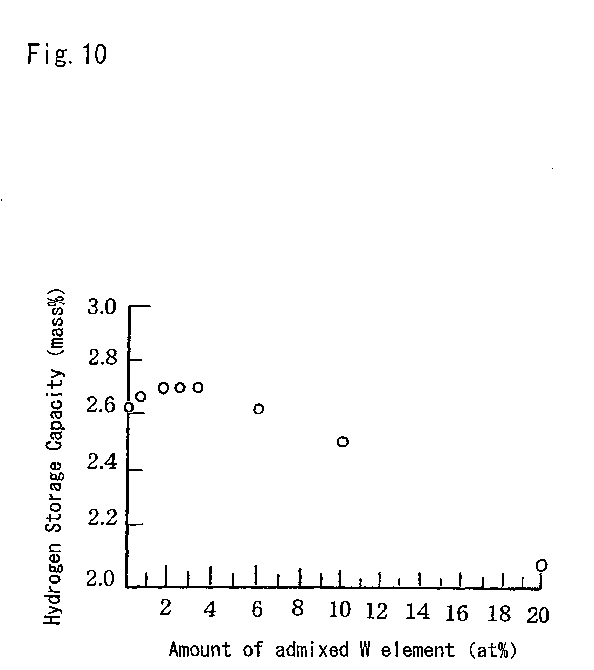

The influence of additive Mo and W levels on the hydrogen adsorption and desorption characteristics for such heat-treated Ti-Cr-Mo and Ti-Cr-W alloys is shown in FIGs. 9 and 10. When the additive element is Mo, it has been found that the admixture of Mo at a small amount leads to an increase in hydrogen adsorption capacity, i.e., the hydrogen adsorption capacity is maximized at about 3 ±1.5 at% of the additive Mo while the hydrogen adsorption capacity is gradually decreased in the 5 at% or more Mo regions which were presumed to be preferable in the prior art. It has also been found that, when Mo is admixed at 10 at% or more, the hydrogen adsorption capacity is reduced less than that of heat-treated Mo-free Ti-Cr alloys, When the additive element is W, it has been observed that the resultant alloy products have a tendency similar to that for the aforementioned Mo. It has thus been found that the admixture of W at a small amount leads to an increase in hydrogen adsorption capacity, i.e., the hydrogen adsorption capacity is maximized at about 3 ± 1.5 at% of the additive W while the hydrogen adsorption capacity is gradually decreased in the 5 at% or more W regions which were presumed to be preferable in the prior art. It has also been found that, when W is admixed at 6 at% or more, the hydrogen adsorption capacity is reduced less than that of heat-treated W-free Ti-Cr alloys.

Hence, these elements Mo and W are preferably admixed at a micro amount so as to obtain the effect of increasing occupied volume ratios of the BCC phase that appears in such Ti-Cr binary alloys. In comparison for the intensity of a BCC-forming tendency in Ti-Cr alloys, it is found that Mo and W elements tend to increase the BCC-occupied volume ratio even when they are admixed at a smaller amount than V, and reversely reduces the hydrogen storage amounts per unit weight when they are admixed at an excessive amount. Although each of Mo and W is independently admixed alone in order to clarify the efficacy of individual admixed elements in the foregoing embodiments, the present invention is not limited to. It is preferred that one of two elements Mo and W may be admixed in combination with the other. For amounts of the admixed elements in this instance, it is preferable that a total amount of admixed elements Mo and W may be less than 5 at%.

As aforementioned, V has an atomic weight approximately equivalent to that of Ti or Cr. Although V is expensive, a change (increase) in molecular weight for alloy products is minimized even when an amount of substituents increases. Therefore, there are advantages that amounts of occluded hydrogen do not reduce very much. Accordingly, in order to produce BCC mono phase alloys with a high capacity by melting a large amount of alloys followed by rapidly cooling (quenching) and, if necessary, heat-treatments, it is forecasted that V may be effectively admixed therein in combination with at least one member selected from the aforementioned Mo, W, etc. Thus, for the aforementioned low V level Ti-Cr-V alloys, which have been conventionally considered to be hardly produced in a BCC phase form, their efficacies are examined and proved in case where a replacement with Mo partially takes place.

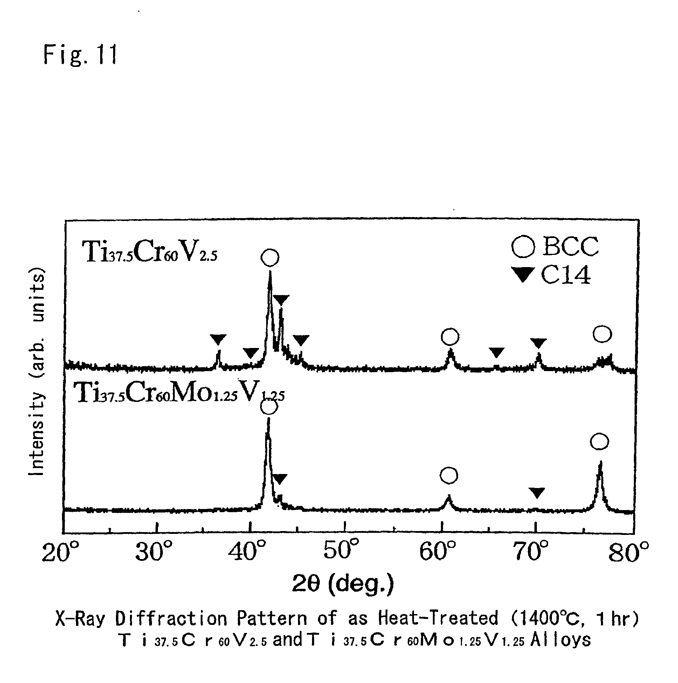

An X-ray diffraction pattern each of as heat-treated Ti_{37.5}Cr₆₀V_{2.5} and Ti_{37.5}Cr₆₀Mo_{1.25}V_{1.25} alloys is shown in FIG. 11. Reflections by the Laves phase are observed for the heat-treated alloy Ti_{37.5}Cr₆₀V_{2.5} as shown in FIG. 11 (identical with X=2.5 as in Fig. 3), and the hydrogen adsorption and desorption characteristics remain to an extent of 2.6 %. However, it has been found that the heat-treated alloy Ti_{37.5}Cr₆₀Mo_{1.25}V_{1.25} wherein V is partially replaced with Mo are almost in the form of a BCC mono phase and its hydrogen adsorption and desorption characteristics are improved to be an extent of about 2.7 wt%. In this way, V can be admixed therein in combination with Mo (also W) so as to reduce an amount of expensive V to be admixed together with a reduction in amounts of Mo (and/or W) to be admixed, with the result that the occupied volume ratio of BCC phases will increase together with these admixtures, thereby leading to an increase in hydrogen adsorption capacity. Therefore, it can be said that the admixture of V in combination with Mo (and/or W) is a preferable technique for producing inexpensive hydrogen storage metal alloys with a high capability of absorbing and storing hydrogen.

In the hydrogen storage metal alloy-producing process according to the present invention, conditions under which the aforementioned alloys having a predetermined element ratio are heat-treated are extremely important. The heat treatment of retaining molten and homogenized alloys at a temperature (T) just lower than the melting point (Tm) of each alloy for a predetermined period of time is performed, whereby a high hydrogen storage capacity can be attained. The temperature just lower than the melting point is preferably set to a range of 0.8 ≦ T/Tm ≦ 1.0. When the temperature is too low, it is unfavorable because the hydrogen storage capacity will be deteriorated due to the generation of heteromorphic phases, or long-time heat treatments will be required. When the heat treatment is performed at an excessively high temperature exceeding the melting point, it is unpreferable that the hydrogen storage capacity is remarkably deteriorated.

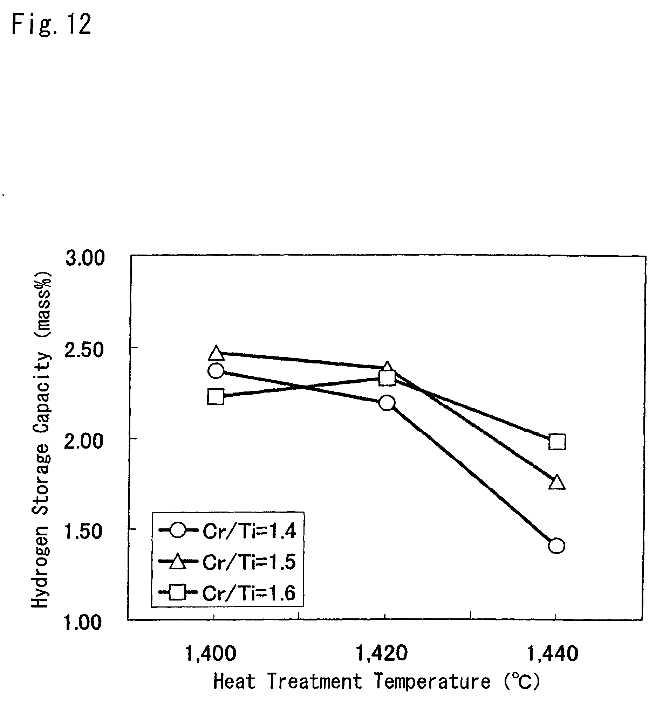

As an embodiment, the relationship between heat treatment temperature and hydrogen storage capacity for Ti-Cr binary alloys is shown in FIG. 12, wherein it is apparent that the hydrogen storage capacity is remarkably deteriorated at 1440 °C exceeding the melting point, as compared with a heat treatment at 1420 °C or 1400°C lower than the melting point. The same tendency is also observed in alloys wherein V is added at 5 at% to Ti-Cr alloys. In this alloy system, the hydrogen storage capacity for samples heat-treated at a heat treatment temperature of 1450 °C exceeding the melting point is deteriorated, in comparison with samples heat-treated at 1400°C .

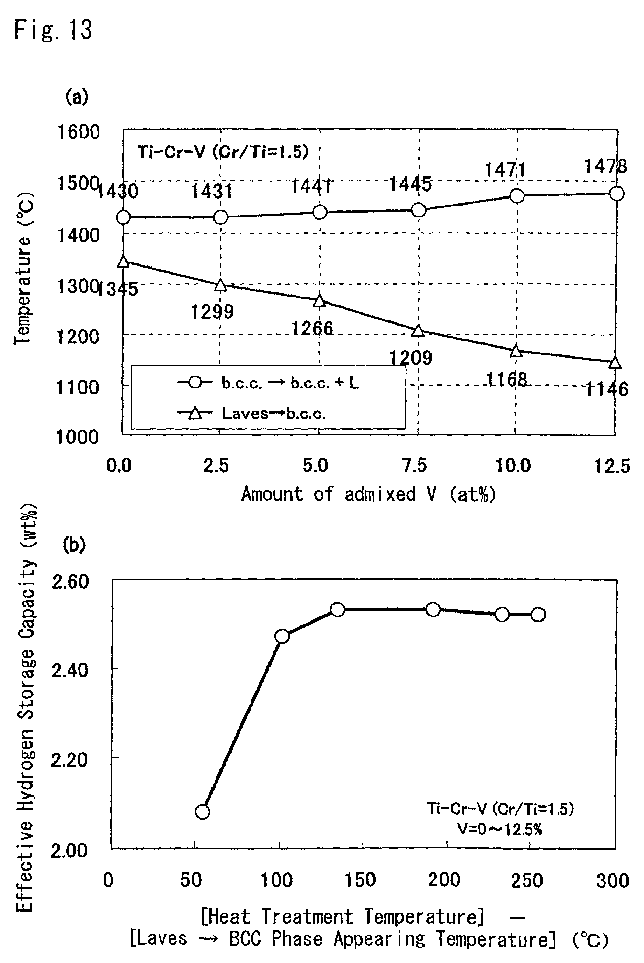

The quantitative V-dependency of both temperature at which the BCC phase appears from the Laves phase and temperature at which a liquid phase appears from the BCC phase is measured for alloy Ti-Cr-V (Cr/Ti=1.5) with a thermal analyzer. The results are shown in FIG. 13(a). FIG. 13(b) is a graph showing the heat treatment temperature dependency of hydrogen storage capacity. It is found from FIG .13(b) that it is important for acquisition of a large hydrogen storage capacity to perform the heat treatment at a temperature higher than the temperature at which the BCC phase appears from the Laves phase. It can be easily calculated from the above drawings that an alloy containing, for example, 10% element V requires T/Tm ≧ 0.83. Namely, high characteristics cannot be expected with T/Tm<0.8. Accordingly, to provide a high hydrogen storage capacity even if the melting point is changed depending on alloy, the heat treatment is preferably performed in the temperature range of 0.8 ≦ T/Tm ≦ 1.0.

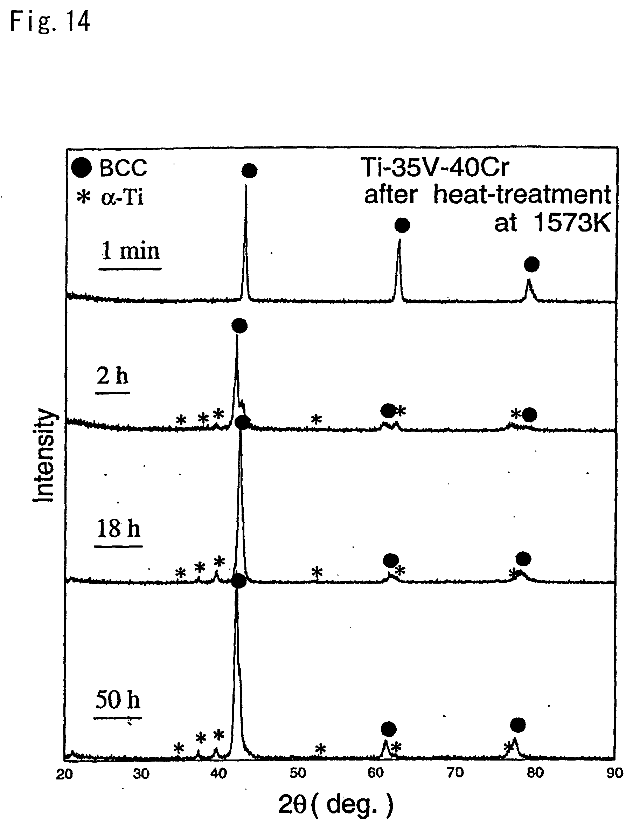

In the heat treatment, a suitable range is also present for the heat treatment time. The heat treatment time dependency of XRD profiles for alloy Ti₂₅Cr₄₀V₃₅ homogenized by repeating arc melting when heating at 1300°C is shown in FIG. 14. As shown in this drawing, when heat-treated for 2 hr or more, α-Ti phase is precipitated, thereby deteriorating the hydrogen storage capacity. This reason is putatively that the starting materials used are 99% pure or more, i.e., insufficient in purity, and contain oxygen at a high level, thereby causing the generation of the α-Ti phase. When highly pure starting materials are used, the amount of precipitated α -Ti phases is not so large even by the heat treatment for 1 hr or more, but the heat treatment is accompanied by an economical disadvantage. Accordingly, the treatment time is preferably set to 1 hr or less. Since the starting material purity has no influence on the shorter heat treatment time region and the BCC phase tends to be obtainable in a stable fashion when the starting material purity is improved, the treatment time can be set to 1 min or more from the above viewpoint.

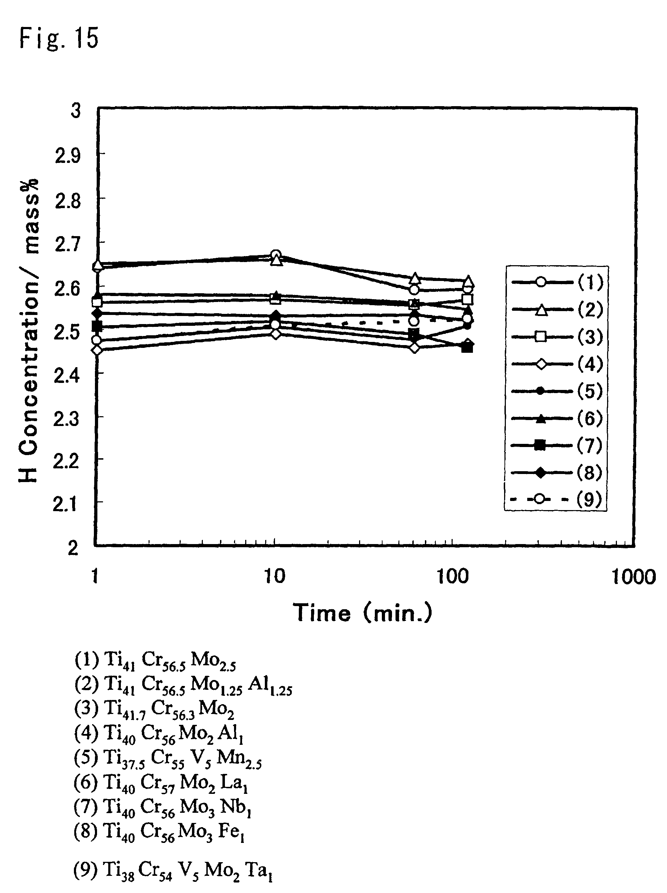

FIG. 15 shows variations in hydrogen storage capacity during a retaining period at 1400 °C for various Ti-Cr-based alloys, wherein (1) is Ti₄₁Cr_{56.5}Mo_{2.5}, (2) Ti₄₁Cr_{56.5}Mo_{1.25}Al_{1.25}, (3) Ti_{41.7}Cr_{56.3}Mo₂, (4) Ti₄₀Cr₅₆Mo₂Al₁, (5) Ti_{37.5}Cr₅₅V₅Mn_{2.5}, (6) Ti₄₀Cr₅₇Mo₂La₁, (7) Ti₄₀Cr₅₆Mo₃Nb₁, (8) Ti₄₀Cr₅₆Mo₃Fe₁, and (9) Ti₃₈Cr₅₄V₅Mo₂Ta₁. Since the hydrogen storage capacity tends to reduce in any of cases where the heat treatment time exceeds 1 hr although it varies depending on alloys, the heat treatment time is preferably set to from 1 min to 1 hr.

The reason why alloys each having such an alloy composition (such ingredients) can be readily designed is that the source of present invention is based on Ti-Cr binary BCC alloys, unlike the prior art. It is reported in Japanese Patent Application No. 11-86866 ((or 86866/1999) that hydrogen can efficiently be utilized via applications of a difference in temperature, characterized by storing hydrogen at a low temperature in body-centered cubic structure hydrogen storage alloys each having a two-stage plateau or inclined plateau and elevating the alloy working temperature to a high temperature for at least a period of hydrogen release process. In case where the differential temperature method is applied to the aforementioned VₓTi_{37.5}Cr_{62.5-x} alloy, its hydrogen absorption and desorption characteristics are shown in FIG. 6. It is apparent that the application of the differential temperature method to the alloys of the present invention will lead to a hydrogen storage capacity of about 3.0 wt %. As compared to FIG. 7, it is observed that the differential temperature method derives an increase in hydrogen storage capacity at about 0.2 wt %, and it is therefore experimentally proved that the differential temperature method is effective for alloys attained by the present invention. Its practicability can also be understood.

## Claims

1. A process for producing a hydrogen storage alloy having as its main phase a body-centered cubic structure phase capable of absorbing, storing and releasing hydrogen, which comprises steps:
(a) a melting step of melting a starting alloy brought to a predetermined element ratio to form a homogeneous heat,
(b) a heat-treatment step of retaining the homogenized alloy at a temperature equal to or just lower than the melting point of the alloy for a predetermined period of time; and
(c) a quenching step of rapidly cooling the heat-treated alloy.

2. The process according to claim 1 wherein the ratio of the heat-treating process temperature (T) to the alloy melting point (Tm), T/Tm, is within a temperature range of 0.8 ≦ T/Tm ≦ 1.0, in the heat-treatment step.

3. The process according to claim 1 or 2 wherein the heat treatment step is conducted for a retaining period of time ranging from 1 min to 1 hr.

4. The process according to any of claims 1 to 3 wherein the starting alloy to be molten to form a homogeneous heat has a composition represented by the general composition formula:
Ti_{(100-a-0.4b)}Cr_{(a-0.6b)}M_{b}
wherein
M is V; and
20 ≦ a (at%) ≦ 80 and 0 ≦ b (at%) ≦ 10.

5. The process according to any of claims 1 to 3 wherein the starting alloy to be molten to form a homogeneous heat has a composition represented by the general composition formula:
Ti_{(100-a-0.4b)}Cr_{(a-0.6b)}M_{b}
wherein
M is at least one element of Mo and W; and
20 ≦ a (at%) ≦ 80 and 0 ≦ b (at%)<5.

6. The process according to any of claims 1 to 3 wherein the starting alloy to be molten to form a homogeneous heat has a composition represented by the general composition formula:
Ti_{(100-a-0.4b)}Cr_{(a-0.6b)}V_{(b-c)}M_{c}
wherein
20 ≦ a (at%) ≦ 80, 0 ≦ b (at%) ≦ 10, and
0 ≦ c (at%)<5; and
M is at least one element of Mo and W.
